# EUROPÄISCHE PATENTSCHRIFT

(11) **EP 1 669 241 B1**
(45) Veröffentlichungstag und Bekanntmachung des Hinweises auf die Patenterteilung: **27.07.2011**
(21) Anmeldenummer: 05024994.5
(22) Anmeldetag: 16.11.2005
(51) Int. Cl.: B60N 2/48, B60N 2/427

(54) **Kopfstütze für Fahrzeugsitze**
Headrest for vehicle seats
Appui-tête pour sièges de véhicule

(30) Priorität: 08.12.2004 DE 102004059237
(43) Veröffentlichungstag der Anmeldung: 14.06.2006
(73) Patentinhaber: GRAMMER AG, 92224 Amberg (DE)
(72) Erfinder: Hoffmann, Markus, 92245 Kümmersbruck (DE)
(74) Vertreter: Ostriga, Sonnet, Wirths & Roche

(56) Entgegenhaltungen:
- EP-A- 0 974 484
- WO-A-2004/014688
- DE-A1- 3 109 592
- DE-A1- 3 900 495
- DE-A1- 19 946 404
- US-A- 4 278 291

## Beschreibung

Die Erfindung betrifft eine Kopfstütze für Fahrzeugsitze entsprechend dem Oberbegriff des Anspruchs 1. Eine solche Kopfstütze ist in der DE 31 09 592 C2 beschrieben. Eine Eigenart dieser bekannten Kopfstütze besteht darin, dass der gesamte Polsterträger und nicht nur ein Teil des Polsterträgers (wie z.B. gemäß der DE 39 00 495 A1 oder gemäß der EP 0 974 484 B1) relativ zu einem an der Sitzlehne eines Fahrzeugsitzes gehaltenen Grundkörper horizontal verstellarretierbar ist.

Auf diese Weise gestattet die Kopfstütze gemäß der DE 31 09 592 C2 eine Verstellung (Horizontalverstellung) des von einem Polsterkörper umgebenen Polsterträgers entlang der Fahrt- bzw. Anlehnrichtung, um die Lage der kopfstützenseitigen Kopf-Aufprallfläche in Anpassung an die körperlichen Gegebenheiten des Benutzers individuell justieren zu können. Eine solche Justierung soll dazu dienen, den schädlichen Beschleunigungsweg eines Fahrgastkopfes im Falle eines Crash zu minimieren.

Von der vorerwähnten DE 39 00 495 A1 ist es bekannt, einen vorderen Bereich des Polsterträgers gesondert so auszubilden, dass dieser sich mittels einer Verstelleinrichtung selbsttätig in eine an den Fahrgastkopf angenäherte Stützlage verlagert und anschließend an der Kopfstütze arretiert, wenn ein Fahrzeuge und/oder Hindernisse erfassender Sensor im Falle eines Crash ein Auslösesignal abgibt.

Grundsätzlich ähnlich wie die Kopfstütze gemäß der DE 39 00 495 A1 wirkt die Kopfstütze entsprechend der ebenfalls vorerwähnten EP 0 974 484 B1, welche darüber hinaus einen in Ausfahrrichtung des vorderen Kopfanlageteils federbelasteten Schwenkarm aufweist, der für eine Arretierung des im Falle eines Crash ausgefahrenen gesonderten vorderen Kopfanlageteils sorgt, d.h. dessen nicht abstützende Rückwärtsbewegung in die Ausgangslage bzw. Ruhelage verhindert.

Von der US 4 278 291 ist schließlich ein eine Zahnleiste und eine Klinke aufweisendes lineares Zahnrichtgesperre bekannt, welches eine Rückwärtsbewegung eines den Fahrgastkopf abstützenden horizontal nach vorn verlagerten Kopfanlageteils einer Kopfstütze verhindert.

Ausgehend von der eingangs beschriebenen gattungsgemäßen Kopfstütze entsprechend der EP 0 974 484 B1, liegt der Erfindung die Aufgabe zugrunde, die bekannte Kopfstütze so weiter zu entwickeln, dass diese mit einem relativ geringen Zusatzaufwand eine selbsttätige Vorverlagerung des Kopfpolsterträgers im Bedarfsfalle, insbesondere im Falle eines Crash, gestattet.

Gemeinsam mit den Merkmalen des Oberbegriffs des Anspruchs 1 wird diese Aufgabe mit dessen kennzeichnenden Merkmalen dadurch gelöst, dass innerhalb des verstell- und arretierbaren Polsterträgers ein Hebel drehgelagert ist, dass der Hebel mittels einer Antriebseinheit in seine Wirkstellung hinein verschwenkbar ist, in welcher sich das dem Hebel-Drehlager abgewandte freie Hebelende, Teil einer Spreize bildend und den Polsterträger relativ zum Grundkörper verschiebend, am Grundkörper gleitend abstützt.

Die angegebene horizontale Richtung sowie die im folgenden zusätzlich erwähnte Vertikalrichtung beziehen sich auf den Einbauzustand der erfindungsgemäßen Kopfstütze. Diese ermöglicht eine baulich höchst einfache Ergänzung durch eine selbsttätig betreibbare Verstelleinrichtung, welche als wesentliches Element nur einen Hebel aufweist, der mittels einer Antriebseinheit in seine Wirkstellung hinein verschwenkbar ist. Dieser Hebel, welcher im Polsterträger drehgelagert ist, stützt sich mit seinem freien Hebelende am sitzlehnenfesten Grundkörper ab und spreizt so im Bedarfsfalle den Polsterträger vom Grundkörper ab, verschiebt also den Polsterträger relativ zum Grundkörper in eine vorverlagerte Horizontalposition in Richtung Fahrgastkopf.

Obwohl die Erfindung eine zug- und druckfeste Verbindung des freien Hebelendes mit dem Grundkörper nicht ausschließt, besteht eine bevorzugte erfindungsgemäße Ausführungsform darin, dass das dem Hebel-Drehlager abgewandte freie Hebelende unter Vermeidung von formschlüssigen Verbindungsmitteln sich nur druckfest am Grundkörper abstützt, womit eine höchst einfache Bauweise einhergeht.

Zweckmäßig bildet die dem Hebel zugewandte Fläche des Grundkörpers, auf welcher sich das freie Hebelende abstützt, eine sich im wesentlichen vertikal erstreckende Ebene.

Grundsätzlich lässt die Erfindung jegliche Position und Orientierung des Hebel-Drehlagers innerhalb des Polsterträgers zu, wenn der Hebel im Bedarfsfalle nur seine spreizende Wirkung entfalten kann, mittels welcher der Polsterträger relativ zum Grundkörper vorgeschoben wird.

Es hat sich indessen - auch zur Erzielung einer einfachen Bauweise - als vorteilhaft herausgestellt, dass sich die Achse des Hebel-Drehlagers im wesentlichen horizontal und im wesentlichen parallel zu der dem Hebel zugewandten Fläche des Grundkörpers erstreckt.

Eine bevorzugte erfindungsgemäße Ausführungsform besteht überdies darin, dass der Hebel einen zweiarmigen Hebel darstellt, dessen längerer Hebelbereich die Spreize und dessen kürzerer Hebelbereich eine Kupplungsstelle für die Antriebseinheit bildet.

Eine andere erfindungsgemäße Ausführungsform besteht darin, dass die Antriebseinheit eine Kolben-Zylindereinheit ist, deren Antriebsende ein Drehgelenk mit der Kupplungsstelle des kürzeren Hebelbereichs und deren dem Antriebsende gegenüberliegendes Lagerende ein Drehlager mit dem Polsterträger bildet. Auf diese Art hat die Erfindung ein vorteilhaftes Übersetzungsverhältnis geschaffen, welche mit einer raumsparenden Antriebsbewegung eine relativ große Verstellbewegung des längeren Hebelbereichs, und damit des Polsterträgers, in Horizontalrichtung gestattet.

Das bereits erwähnte vorteilhafte Erfindungsmerkmal, wonach sich das dem Hebel-Drehlager abgewandte freie Hebelende nur druckfest am Grundkörper abstützt, kommt einer erfindungsgemäßen vorteilhaften Ausführungsform entgegen, gemäß welcher Hebel und Antriebseinheit gemeinsam eine modulartige Baugruppe bilden. Zur Montage dieser modulartigen Baugruppe innerhalb des Polsterträgers bedarf es nur der Befestigung der modulartigen Baugruppe, beispielsweise durch eine Einschieb-Verrastmontage, zumal es wegen der nur druckfesten Abstützung des freien Hebelendes am Grundkörper keiner aufwendigen formschlüssigen Bewegungsverbindung bedarf.

Weitere Erfindungsmerkmale ergeben sich aus zusätzlichen Unteransprüchen.

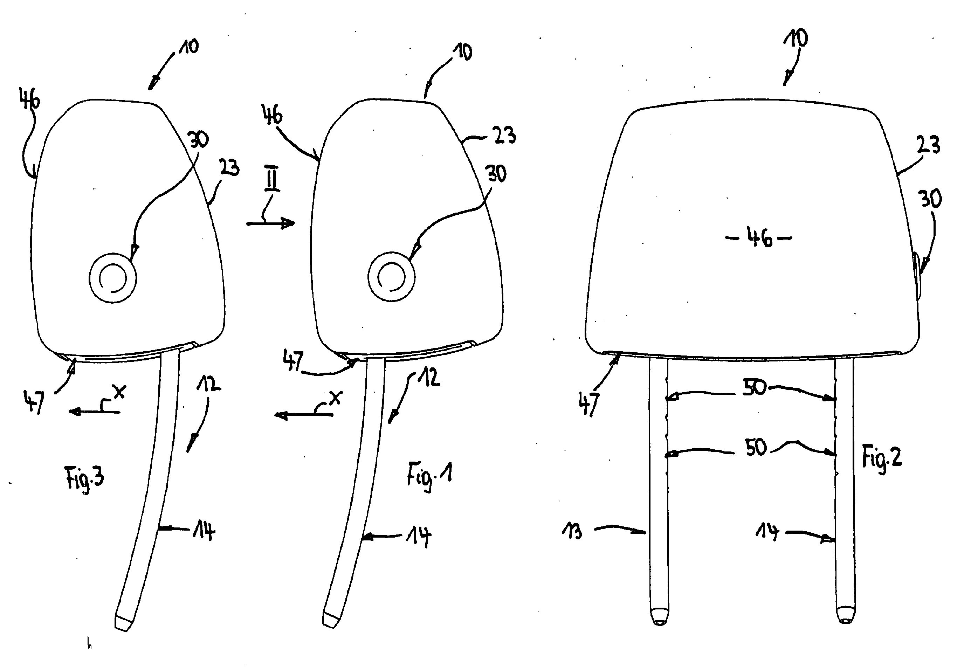

In den Zeichnungen ist ein bevorzugtes Ausführungsbeispiel entsprechend der Erfindung dargestellt, es zeigt
Fig. 1 eine Seitenansicht einer Kopfstütze in Alleinstellung,
Fig. 2 eine Frontansicht der Kopfstütze entsprechend dem in Fig. 1 mit II bezeichneten Ansichtspfeil in Ruhestellung der Kopfstütze,
Fig. 3 die in Fig. 1 dargestellte Kopfstütze in ihrer horizontal vorgeschobenen Position,
Fig. 4-6 Vertikalschnitte in derselben Schnittebene bei unterschiedlichen Funktionsstellungen der Kopfstütze,
Fig. 7 einen Vertikalschnitt der Kopfstütze in einer gegenüber den Fig. 4-6 parallelen Schnittebene,
Fig. 8-10 räumliche Darstellungen der Kopfstütze in unterschiedlichen Funktionsstellungen entsprechend den Fig. 4-6, wobei zur besseren Darstellung der Funktionen Bereiche der Kopfstütze weggelassen sind und
Fig. 11 die in Fig. 8 dargestellte Kopfstütze etwa in einer in Fig. 8 mit VIII bezeichneten Blickrichtung.

In den Zeichnungen ist eine Kopfstütze für Fahrzeugsitze mit 10 bezeichnet. Die Fahrtrichtung ist mit x angegeben. Die Kopfstütze 10 weist einen Grundkörper 11 auf, welcher im vorliegenden Falle unverschieblich fest auf einem zwei Einsteckbereiche 13, 14 aufweisenden Tragstangenbügel 12 angeordnet ist. Grundsätzlich ist es auch möglich, den Grundkörper 11 neigeverstellbar auf dem Joch 15 des Tragstangenbügels 12 anzuordnen.

Mit dem Grundkörper 11 relativverschieblich verbunden ist ein Polsterträger 16, welcher bezüglich des Grundkörpers 11 in der horizontalen Richtung v vorgeschoben oder in der horizontalen Richtung z zurückgeschoben werden kann. Hierzu weist der Polsterträger 16 eine obere Gleitstange 17 und zwei untere Gleitstangen 18 auf, welche sich sämtlich horizontal und parallel zueinander erstrecken.

Die Gleitstangen 17, 18 verbinden eine vordere Stirnwand 19 und eine rückseitige Stirnwand 20 des Polsterträgers 16 miteinander. Die Stirnwände 19, 20 sind zudem von einer Polsterträgerhaube 21 umgeben, welche im übrigen ein von einem Bezug 23 umkleidetes Schaumpolster 22 trägt. Die Gleitstangen 17, 18 sind in Lageröffnungen 24 des Grundkörpers 11 gleitgelagert.

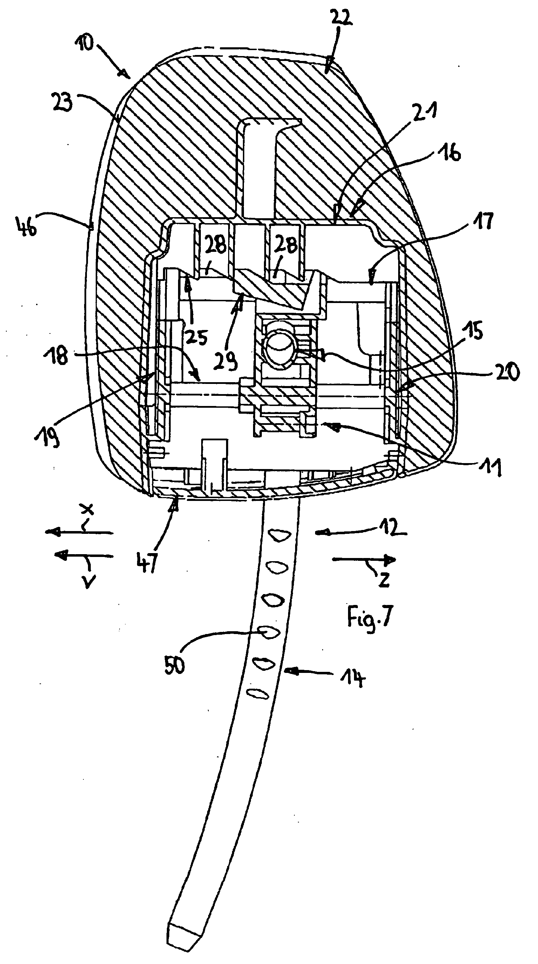

Parallel zu den Gleitstangen 17, 18 sind in dem Polsterträger 16 mindestens eine Zahnleiste, im vorliegenden Falle zwei Zahnleisten 25, befestigt, deren nach unten offene und jeweils eine Sperrflanke 26 sowie eine Gleitflanke 27 aufweisende Zahnaussparungen 28 von einer aus Fig. 7 ersichtlichen Sperrklinke 29 untergriffen sind und mit dieser zusammenwirken.

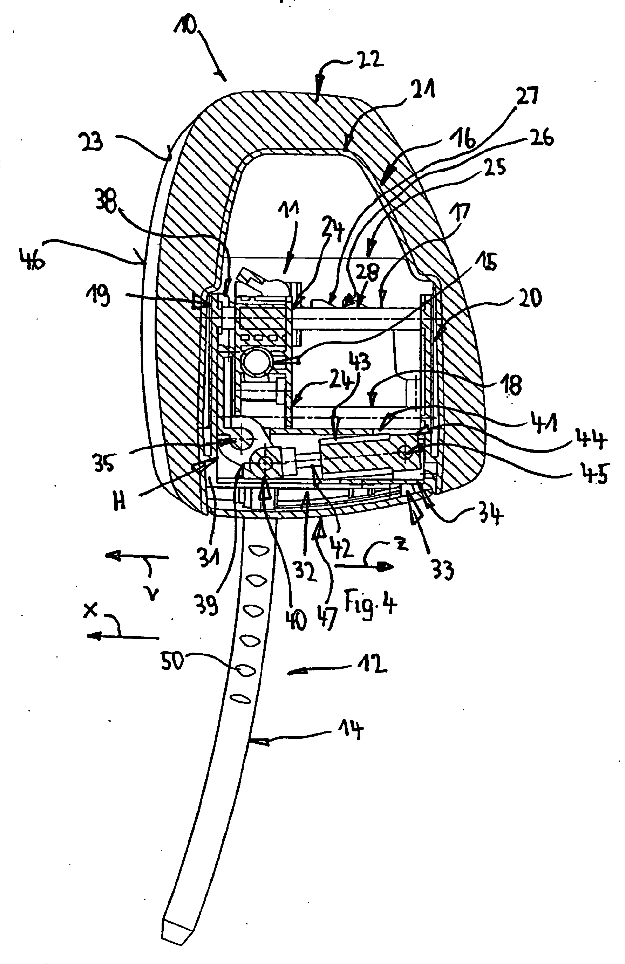

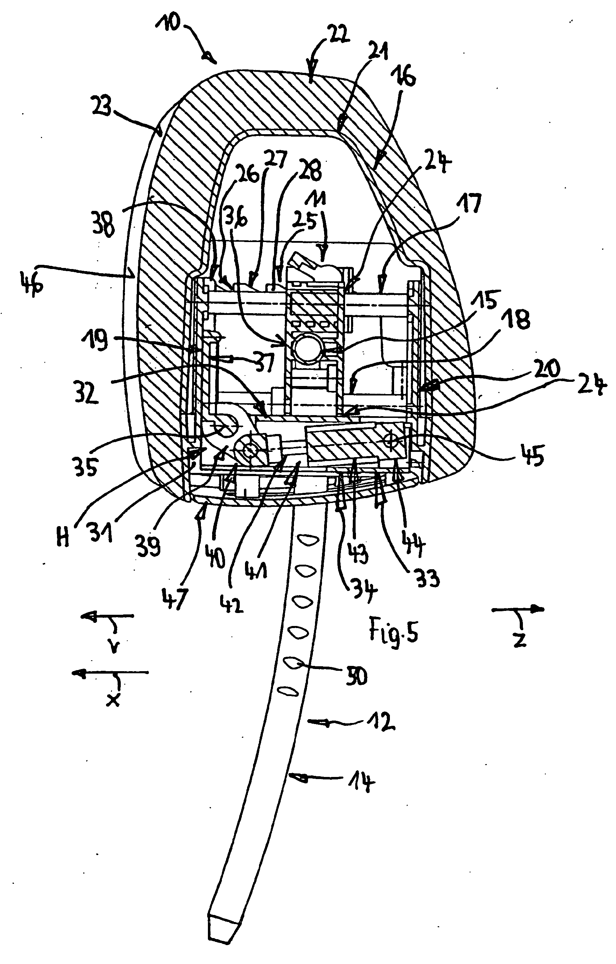

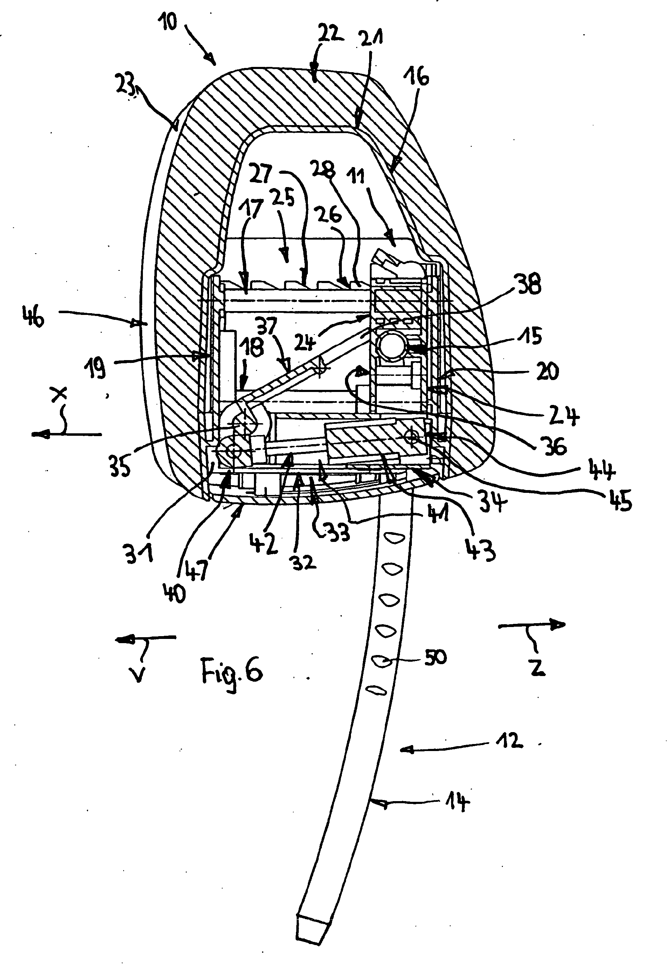

Die Zahnaussparungen 28 und die in Eingriffsrichtung federbelastete Sperrklinke 29 sind so angeordnet, dass, ausgehend von Fig. 4, der Polsterträger 16 behinderungsfrei - auch von Hand - in Richtung v vorgeschoben werden kann. Dieses zunächst beispielsweise in eine mittlere Funktionsstellung gemäß Fig. 5 und in eine am weitesten vorgeschobene Funktionsstellung gemäß Fig. 6. Bei diesem behinderungsfreien Vorschieben in Richtung v gleitet die Sperrklinke 29 über die Gleitflanken 27 der Zahnaussparungen 28 hinweg.

Eine Rückwärtsverschiebung des Polsterträgers 16 - auch von Hand - in Richtung z ist hingegen nicht ohne weiteres möglich, weil die Sperrklinke 29 gegen die jeweilige Sperrflanke 26 stößt. Eine Rückwärtsverschiebung des Polsterträgers 16 in Richtung z ist daher nur möglich, wenn die Sperrklinke 29 außer Eingriff mit den Zahnaussparungen 28 versetzt wird, was durch Betätigung einer Drucktaste 30 in einer im einzelnen noch zu beschreibenden Weise bewerkstelligt werden kann.

In seinem unteren Bereich bildet der Polsterträger 16 einen Einbauraum 31, in welchem das Gehäuse 32 eines Einbaumoduls 33 aufgenommen ist. Das Gehäuse 32 weist u.a. eine Basisplatte 34 auf. Innerhalb des Gehäuses 32 ist ein zweiarmiger Hebel H an einem Hebel-Drehlager 35, welches in dem Gehäuse 32 befestigt ist, gelagert. Die Achse des Hebel-Drehlagers 35 erstreckt sich im wesentlichen horizontal und im wesentlichen parallel zu der dem Hebel H zugewandten Fläche 36 des Grundkörpers 11.

Ein längerer Hebelbereich des Hebels H stellt eine Spreize 37 mit einem freien Hebelende 38 dar, während ein kürzerer Hebelbereich 39 eine als Drehgelenk ausgebildete Kupplungsstelle 40 für die eigentliche Antriebseinheit bildet, welche als Kolben-Zylindereinheit 41 ausgebildet ist.

Die Kolben-Zylindereinheit 41 weist als Antriebsende eine Kolbenstange 42 und einen Zylinder 43 mit einem Zylinderkopf 44 auf. Die Drehgelenkachse des Antriebsendes 42 innerhalb der Kupplungsstelle 40 und die Drehgelenkachse 45 des der Kupplungsstelle 40 abgewandten Zylinderkopfes 44 erstrecken sich ebenfalls im wesentlichen horizontal und parallel zu der vorgenannten Fläche 36 des Grundkörpers 11.

Die Kolben-Zylindereinheit 41 ist in nicht dargestellter Weise durch ein von einem nicht dargestellten Gasgenerator erzeugtes Gas beaufschlagbar. Der Gasgenerator kann innerhalb der Kopfstütze angeordnet sein. Dies geschieht wie folgt:
Ausgehend von Fig. 4, welche die Kopfstütze in ihrer Ruhestellung zeigt, bewirkt ein durch einen Crash aktivierter Crashsensor in nicht dargestellter Weise mittels des Gasgenerators die Erzeugung eines Gases, welches daraufhin in den Zylinder 43 strömt, die Kolbenstange 42 ausfahren lässt und den Hebel H so verschwenkt, dass dessen Spreize 47 mit dem freien Hebelende 38 sich gegen die Fläche 36 des Grundkörpers 11 abstützt und dabei den Polsterträger 16 vom Grundkörper 11 abspreizt. Der Polsterträger 16 wird also in Richtung v vorgeschoben, wie Fig. 6 zeigt. Zugleich wirkt als Rücklaufsperre das Zahnrichtgesperre 25, 29, so dass eine sichere Abstützung des Fahrgastkopfes an der Kopfanlagefläche 46 gewährleistet ist.
Anhand der Fig. 4 bis 6 ist insbesondere auch vorstellbar, dass das Einbaumodul 33, welches sowohl die Antriebseinheit 41 (im vorliegenden Falle:Kolben-Zylindereinheit) als auch den Hebel H umfasst, im Wege einer im einzelnen nicht dargestellten Einschiebe-Verrastmontage innerhalb des Polsterträgers 16 befestigt und die Montageöffnung schließlich mittels einer Verschlussplatte 47 verschlossen werden kann.

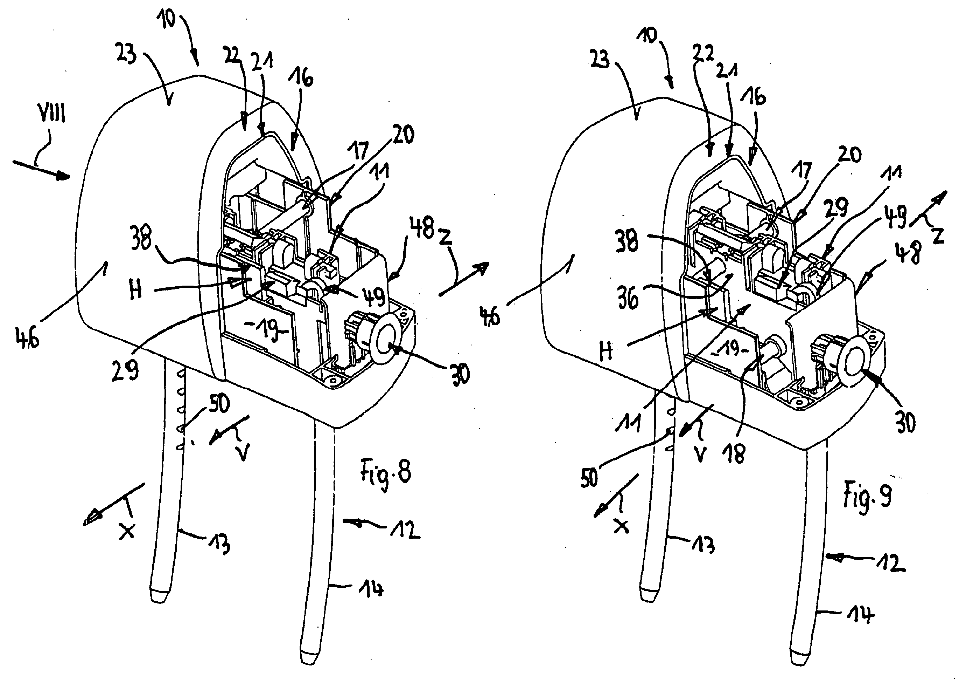

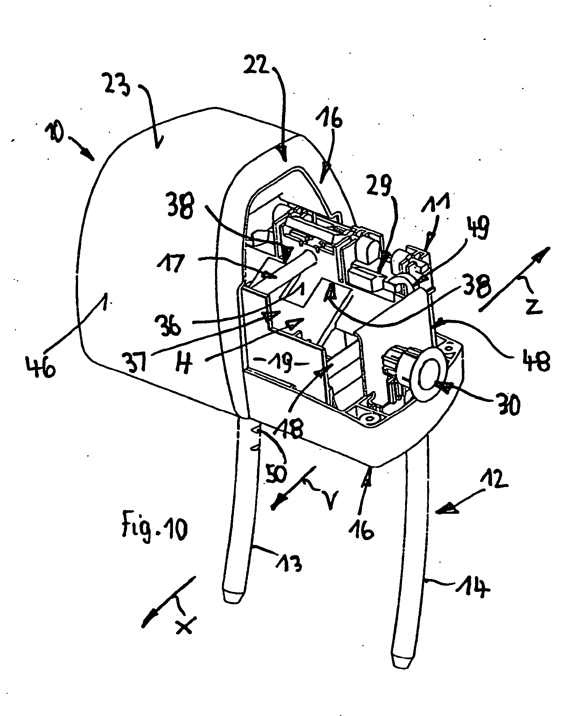

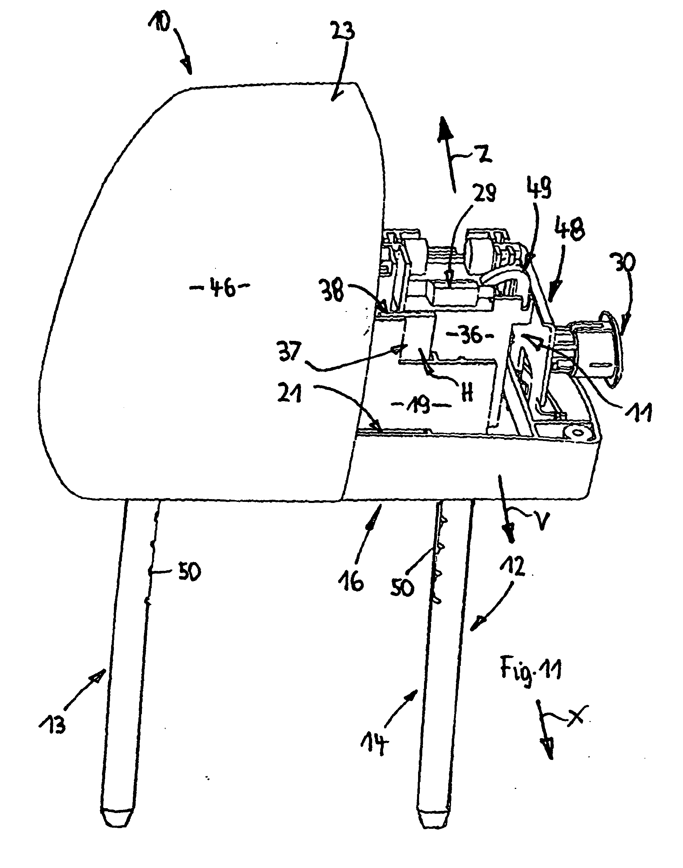

Die Betätigung des Zahnrichtgesperres 25, 29 (Rücklaufsperre) funktioniert wie folgt:
Das lineare Zahnrichtgesperre 25, 29 enthält als Sperrelement zunächst die Sperrklinke 29, welche am Grundkörper 11 gelagert ist. In diesem Zusammenhang wird insbesondere verwiesen auf die Fig. 7 bis 11. Ein anderes Sperrelement, nämlich die Zahnleiste 25, ist, wie bereits weiter oben erwähnt, innerhalb des Polsterträgers 16 befestigt und demnach mit letzterem bewegungseinheitlich angeordnet.
Weiterhin ist eine kippbare und mit dem Polsterträger 16 bewegungseinheitliche, mit der Drucktaste 30 verbundene Steuerplatte 48 vorhanden, welche mit einem am Grundkörper 11 gehaltenen und mit der Sperrklinke 29 bewegungsgekuppelten Übertragungselement 49 in einer Gleitverbindung steht. Aus der Zusammenschau der Fig. 8 bis 11 wird deutlich, dass die Steuerplatte 48 gemeinsam mit dem Polsterträger 16 in den Horizontalrichtungen v und z zwar verschoben werden kann, jedoch unabhängig von der horizontalen Verstellposition stets in einem Gleitkontakt mit dem Übertragungselement 49 steht. Auf diese Weise kann unabhängig von der horizontalen Verstellposition des Polsterträgers 16 stets die Sperrklinke 29 betätigt werden.
Die Einsteckbereiche 13, 14 des Tragstangenbügels 12 sind mit Verstellkerben 50 zur sitzlehnenseitigen Höhenverstellung versehen.

## Patentansprüche

1. Kopfstütze (10) für Fahrzeugsitze mit einem an einer Sitzlehne zu haltenden Grundkörper (11) und mit einem relativ zum Grundkörper (11) im wesentlichen in Horizontalrichtung (v, z) verstell- und arretierbaren Polsterträger (16), **dadurch gekennzeichnet, dass** innerhalb des verstell- und arretierbaren Polsterträgers (16) ein Hebel (H) drehgelagert ist, dass der Hebel (H) mittels einer Antriebseinheit (41) in seine Wirkstellung hinein verschwenkbar ist, in welcher sich das dem Hebel-Drehlager (35) abgewandte freie Hebelende (38), Teil einer Spreize (37) bildend und den Polsterträger (16) relativ zum Grundkörper (11) verschiebend, am Grundkörper (11) gleitend abstützt.

2. Kopfstütze nach Anspruch 1, **dadurch gekennzeichnet, dass** sich das dem Hebel-Drehlager (35) abgewandte freie Hebelende (38) nur druckfest am Grundkörper (11) abstützt.

3. Kopfstütze nach Anspruch 1 oder nach Anspruch 2, **dadurch gekennzeichnet, dass** die dem Hebel (H) zugewandte Fläche (36) des Grundkörpers (11), auf welcher sich das freie Hebelende (38) abstützt, eine sich im wesentlichen vertikal erstreckende Ebene bildet.

4. Kopfstütze nach einem der Ansprüche 1 bis 3, **dadurch gekennzeichnet, dass** sich die Achse des Hebel-Drehlagers (35) im wesentlichen horizontal und im wesentlichen parallel zu der dem Hebel (H) zugewandten Fläche (36) des Grundkörpers (11) erstreckt.

5. Kopfstütze nach einem der Ansprüche 1 bis 4, **dadurch gekennzeichnet, dass** der Hebel (H) einen zweiarmigen Hebel darstellt, dessen längerer Hebelbereich die Spreize (37) und dessen kürzerer Hebelbereich (39) eine Kupplungsstelle (40) für die Antriebseinheit (41) bildet.

6. Kopfstütze nach einem der Ansprüche 1 bis 5, **dadurch gekennzeichnet, dass** die Antriebseinheit eine Kolben-Zylindereinheit (41) ist, deren Antriebsende (42) ein Drehgelenk mit der Kupplungsstelle (40) des kürzeren Hebelbereichs (39) und deren dem Antriebsende (42) gegenüberliegendes Lagerende ein Drehlager (45) mit dem Polsterträger (11) bildet.

7. Kopfstütze nach Anspruch 6, **dadurch gekennzeichnet, dass** sich die Drehgelenkachse des Antriebsendes (42) und die Drehgelenkachse (45) des dem Antriebsende (42) gegenüberliegenden Lagerendes im wesentlichen horizontal und parallel zu der dem Hebel (H) zugewandten Fläche (36) des Grundkörpers (11) horizontal erstrecken.

8. Kopfstütze nach Anspruch 6 oder nach Anspruch 7, **dadurch gekennzeichnet, dass** das Antriebsende (42) von der Kolbenstange und das Lagerende von dem Zylinderkopf (44) der Kolben-Zylindereinheit (41) gebildet ist.

9. Kopfstütze nach einem der Ansprüche 6 bis 8, **dadurch gekennzeichnet, dass** die Kolben-Zylindereinheit (41) durch ein Fluid beaufschlagbar ist.

10. Kopfstütze nach Anspruch 9, **dadurch gekennzeichnet, dass** die Kolben-Zylindereinheit (41) durch ein Gas, insbesondere durch ein von einem Gasgenerator erzeugtes Gas, beaufschlagt ist.

11. Kopfstütze nach Anspruch 9 oder nach Anspruch 10, **dadurch gekennzeichnet, dass** der Grundkörper (11) mittels mindestens einer rohrartigen Tragstange (12, 13, 14) an der Sitzlehne gehalten ist.

12. Kopfstütze nach Anspruch 11, **dadurch gekennzeichnet, dass** die Tragstange (12, 13, 14) Steuer- und/oder Betriebsmittel für die Antriebseinheit (41) aufnimmt bzw. führt oder leitet.

13. Kopfstütze nach einem der Ansprüche 1 bis 8, **dadurch gekennzeichnet, dass** die Antriebseinheit einen Federspeicher oder eine elektrisch betriebene Vorschubeinheit bildet.

14. Kopfstütze nach einem der Ansprüche 1 bis 13, **dadurch gekennzeichnet, dass** die Antriebseinheit (41) mittels eines Crash-Sensors aktivierbar ist.

15. Kopfstütze nach einem der Ansprüche 1 bis 13, **dadurch gekennzeichnet, dass** Hebel (H) und Antriebseinheit (41) gemeinsam eine modulartige Baugruppe (33) bilden.

16. Kopfstütze nach Anspruch 15, **dadurch gekennzeichnet, dass** die modulartige Baugruppe (33) auf einer Basisplatte (34) und/oder in einem Gehäuse (32) zusammengefasst ist.

17. Kopfstütze nach Anspruch 16, **dadurch gekennzeichnet, dass** die Basisplatte (34) und/oder das Gehäuse (32) den Boden des Polsterträgers (16) bilden, welche z.B. von der Bodenseite des Polsterträgers (16) her in oder an letzterem anbringbar sind.

18. Kopfstütze nach einem der Ansprüche 1 bis 17, **gekennzeichnet durch** eine Rücklaufsperre, welche den Polsterträger (16) in einer Verstell-und Arretierposition oder wahlweise alternativ in mehreren Verstell- und Arretierpositionen vom Grundkörper (11) distanziert hält.

19. Kopfstütze nach Anspruch 18, **dadurch gekennzeichnet, dass** die Rücklaufsperre ein lineares Zahnrichtgesperre (25, 29) enthält, dessen eines Sperrelement, z.B. eine Klinke (29), am Grundkörper (11) gehalten ist und dessen anderes Sperrelement, z.B. eine Zahnleiste (25), mit dem Polsterträger (16) beweglich ist.

20. Kopfstütze nach Anspruch 19, **dadurch gekennzeichnet, dass** die Rücklaufsperre eine bewegliche, z.B. kippbare, mit dem Polsterträger (16) bewegungseinheitliche, mit einem Bedienelement (30) verbundene Steuerplatte (48) enthält, welche mit einem am Grundkörper (11) gehaltenen und mit dessen Sperrelement (Klinke 29) bewegungsgekuppelten Übertragungselement (49) in einer Gleitverbindung steht.

## Claims

1. Headrest (10) for vehicle seats, said headrest having a base member (11), which is to be held on a seatback, and a cushion-carrier (16) which can be adjusted and locked, relative to the base member (11), substantially in the horizontal direction (v, z),
**characterised in that**
a lever (H) is pivotably mounted inside the adjustable and lockable cushion-carrier (16), and that the lever (H) can be tilted inwards, by means of a driving unit (41), into its operative position in which that free end (38) of the lever which faces away from the pivot bearing (35) of said lever is supported in a sliding manner on the base member (11) in a manner forming part of a strut (37) and displacing the cushion-carrier (16) relative to the base member (11).

2. Headrest according to claim 1,
**characterised in that**
**that** free end (38) of the lever which faces away from the pivot bearing (35) of said lever is supported only in a pressure-resistant manner on the base member (11).

3. Headrest according to claim 1 or 2,
**characterised in that**
**that** face (36) of the base member (11) which faces towards the lever (H) and on which the free end (38) of said lever is supported, forms a plane that extends substantially vertically.

4. Headrest according to one of claims 1 to 3,
**characterised in that**
the axis of the pivot bearing (35) of the lever extends substantially horizontally and substantially parallel to that face (36) of the base member (11) which faces towards the lever (H).

5. Headrest according to one of claims 1 to 4,
**characterised in that**
the lever (H) constitutes a two-armed lever, whose longer region forms the strut (37) and whose shorter region (39) forms a coupling point (40) for the driving unit (41).

6. Headrest according to one of claims 1 to 5,
**characterised in that**
the driving unit is a piston/cylinder unit (41), whose driving end (42) forms a pivot joint with the coupling point (40) of the shorter region (39) of the lever and whose bearing end, which is the opposite end from the driving end (42), forms a pivot bearing (45) with the cushion-carrier (11).

7. Headrest according to claim 6,
**characterised in that**
the axis of the pivot joint of the driving end (42) and the axis (45) of the pivot joint of that end of the bearing which is the opposite end from the driving end (42) extend horizontally in a manner substantially horizontal and parallel to that face (36) of the base member (11) which faces towards the lever (H).

8. Headrest according to claim 6 or 7,
**characterised in that**
the driving end (42) is formed by the piston rod, and the bearing end by the cylinder head (44), of the piston/cylinder unit (41).

9. Headrest according to one of claims 6 to 8,
**characterised in that**
the piston/cylinder unit (41) can be subjected to the action of a fluid.

10. Headrest according to claim 9,
**characterised in that**
the piston/cylinder unit (41) is subjected to the action of a gas, particularly a gas generated by a gas generator.

11. Headrest according to claim 9 or 10,
**characterised in that**
the base member (11) is held on the seatback by means of at least one tubular carrying bar (12, 13, 14).

12. Headrest according to claim 11,
**characterised in that**
the carrying bar (12, 13, 14) receives, guides or conducts, as the case may be, control and/or operating means for the driving unit (41).

13. Headrest according to one of claims 1 to 8,
**characterised in that**
the driving unit forms a spring accumulator or an electrically operated feed unit.

14. Headrest according to one of claims 1 to 13,
**characterised in that**
the driving unit (41) can be activated by means of a crash sensor.

15. Headrest according to one of claims 1 to 13,
**characterised in that**
the lever (H) and driving unit (41) jointly form a module-like subassembly (33).

16. Headrest according to claim 15,
**characterised in that**
the module-like subassembly (33) is integrated on a base plate (34) and/or in a housing (32).

17. Headrest according to claim 16,
**characterised in that**
the base plate (34) and/or the housing (32) form(s) the bottom of the cushion-carrier (16), and can be fitted in or on said cushion-carrier (16), e.g. from the bottom side of the latter.

18. Headrest according to one of claims 1 to 17,
**characterised by**
a return-blocking mechanism which keeps the cushion-carrier (16) in an adjusting and locking position or, optionally, alternatively keeps said cushion-carrier spaced apart from the base member (1) in a number of adjusting and locking positions.

19. Headrest according to claim 18,
**characterised in that**
the return-blocking mechanism contains a linear, toothed directional blocking mechanism (25, 29), of which one blocking element, e.g. a catch (29), is held on the base member (11) and of which the other blocking element, e.g. a toothed strip (25), is capable of movement with the cushion-carrier (16).

20. Headrest according to claim 19,
**characterised in that**
the return-blocking mechanism contains a movable, e.g. tiltable, control plate (48) which is united, in terms of movement, with the cushion-carrier (16), is connected to an operating element (30) and is in sliding connection with a transmission element (49) which is held on the base member (11) and is coupled, in terms of movement, with the blocking element (catch 29) of the latter.

## Revendications

1. Appui-tête (10) pour sièges de véhicule, avec un corps de base (11) maintenu verrouillé sur un dossier de siège et avec un support de coussin (16), susceptible d'être manoeuvré et bloqué sensiblement en direction horizontale (v, z) par rapport au corps de base (11), **caractérisé en ce qu'**un levier (H) est monté à rotation à l'intérieur du support de coussin (16) susceptible d'être manoeuvré et bloqué, **en ce que**, à l'aide d'une unité d'entraînement (41), le levier (H) est susceptible de pivoter à sa position efficace, dans laquelle l'extrémité de levier (38) libre, opposée au palier de rotation de levier (35), en formant une partie d'une jambe de force (37) et en déplaçant le support de coussin (16) par rapport au corps de base (11), prend appui avec glissement sur le corps de base (11).

2. Appui-tête selon la revendication 1, **caractérisé en ce que** l'extrémité de levier (38) libre, opposée au palier de rotation de levier (35), ne prend appui, de manière résistante à la pression, que sur le corps de base (11).

3. Appui-tête selon la revendication 1 ou la revendication 2, **caractérisé en ce que** la surface (36), tournée vers le levier (H), du corps de base (11), sur laquelle prend appui l'extrémité de levier (38) libre, forme un plan s'étendant sensiblement verticalement.

4. Appui-tête selon l'une des revendications 1 à 3, **caractérisé en ce que** l'axe du palier de rotation de levier (35) s'étend sensiblement horizontalement et sensiblement parallèlement à la surface (36), tournée vers le levier (H), du corps de base (11).

5. Appui-tête selon l'une des revendications 1 à 4, **caractérisé en ce que** le levier (H) constitue un levier à deux bras, dont la zone de levier longue forme la jambe de force (37) et dont la zone de levier courte (39) forme un point d'accouplement (40) pour l'unité d'entraînement (41).

6. Appui-tête selon l'une des revendications 1 à 5, **caractérisé en ce que** l'unité d'entraînement est une unité à piston-cylindre (41), dont l'extrémité d'entraînement (42) forme une articulation pivotante avec le point d'accouplement (40) de l'extrémité de levier courte (39), et dont l'extrémité de palier, opposée à l'extrémité d'entraînement (42), forme un palier de rotation (45) avec le support de coussin (16).

7. Appui-tête selon la revendication 6, **caractérisé en ce que** l'axe d'articulation pivotante de l'extrémité d'entraînement (42) et l'axe d'articulation pivotante (45) de l'extrémité de palier opposée à l'extrémité d'entraînement (42) s'étendent sensiblement horizontalement et parallèlement à la surface (36), tournée vers le levier (H), du corps de base (11).

8. Appui-tête selon la revendication 6 ou la revendication 7, **caractérisé en ce que** l'extrémité d'entraînement (42) est formée par la tige de piston et l'extrémité de palier est formée par la culasse (44) de l'unité à piston-cylindre (41).

9. Appui-tête selon l'une des revendications 6 à 8, **caractérisé en ce que** l'unité à piston-cylindre (41) est susceptible d'être sollicitée par un fluide.

10. Appui-tête selon la revendication 9, **caractérisé en ce que** l'unité à piston-cylindre (41) est sollicitée par un gaz, en particulier un gaz produit par un générateur de gaz.

11. Appui-tête selon la revendication 9 ou la revendication 10, **caractérisé en ce que** le corps de base (11) est maintenu sur le dossier du siège à l'aide d'au moins une barre support (12, 13, 14) du genre d'un tube.

12. Appui-tête selon la revendication 11, **caractérisé en ce que** la barre support (12, 13, 14) reçoit ou guide ou dirige des moyens de commande et/ou de fonctionnement pour l'unité d'entraînement (41).

13. Appui-tête selon l'une des revendications 1 à 8, **caractérisé en ce que** l'unité d'entraînement est un accumulateur à ressort ou une unité d'avancement fonctionnant électriquement.

14. Appui-tête selon l'une des revendications 1 à 13, **caractérisé en ce que** l'unité d'entraînement (41) est activable à l'aide d'un capteur de collision.

15. Appui-tête selon l'une des revendications 1 à 13, **caractérisé en ce que** levier (H) et l'unité d'entraînement (41) forment conjointement un groupe (33) modulaire.

16. Appui-tête selon la revendication 15, **caractérisé en ce que** le groupe (33) modulaire est regroupé sur une plaque de base (34) et/ou dans un boîtier (32).

17. Appui-tête selon la revendication 16, **caractérisé en ce que** la plaque de base (34) et/ou le boîtier (32) forme (nt) le fond du support de coussin (16), susceptible(s) d'être monté(s) par exemple depuis le côté fond du support de coussin (16) ou sur ce dernier.

18. Appui-tête selon l'une des revendications 1 à 17, **caractérisé par** un blocage de retenue, maintenant le support de coussin (16) espacé du corps de base (11), en une position de manoeuvre et de blocage, ou, au choix, en variante, en plusieurs positions de manoeuvre et de blocage.

19. Appui-tête selon la revendication 18, **caractérisé en ce que** le blocage de retenue contient un mécanisme à encliquetage unidirectionnel à denture (25, 29) linéaire, dont un élément de blocage, par exemple un cliquet (29), est maintenu sur le corps de base (11), et dont un autre élément de blocage, par exemple une crémaillère (25), est mobile avec le support de coussin (16).

20. Appui-tête selon la revendication 19, **caractérisé en ce que** le blocage de retenue contient une plaque de commande (48) mobile, par exemple basculante, cinématiquement unitaire avec le support de coussin (16), reliée à un élément de manoeuvre (30), plaque de commande (48) placée en une relation de glissement avec un élément de transmission (49), maintenu sur le corps de base (11) et couplé cinématiquement à son élément de blocage (cliquet 29).
